# EUROPEAN PATENT APPLICATION

(11) **EP 4 307 769 A1**
(43) Date of publication of application: **17.01.2024**
(21) Application number: 23184660.1
(22) Date of filing: 11.07.2023
(51) Int. Cl.: H04W 36/00, H04W 88/04

(54) **ENHANCEMENT OF SERVICE CONTINUITY OF REMOTE UE DURING INTER-GNB MOBILITY IN SIDELINK BASED UE-TO-NETWORK RELAY**

(30) Priority: 15.07.2022 IN 202241040600
(71) Applicant: Nokia Technologies Oy, 02610 Espoo (FI)
(72) Inventor: YU, Ling, Kauniainen (FI); VAN PHAN, Vinh, Oulu (FI); KUCERA, Stepan, Munich (DE); SABOURI-SICHANI, Faranaz, Aalborg (DK); WOLFNER, György Tamás, Budapest (HU); PANZNER, Berthold, Holzkirchen (DE); R K, Ravi Prasad, Bangalore (IN)
(74) Representative: Nokia EPO representatives

(57) **Abstract**

An apparatus may be configured to: connect to a first base station with one of: a direct connection, or an indirect connection via a first relay user equipment; determine at least one second relay user equipment for receiving a reconfiguration message for path switching to a second base station; establish a sidelink connection with the at least one second relay user equipment; and receive, via the sidelink connection from the at least one second relay user equipment, the reconfiguration message for the path switching to the second base station. An apparatus may be configured to: receive, from a second base station, a reconfiguration message, wherein the received reconfiguration message comprises a reconfiguration message for a remote user equipment; establish a sidelink connection with the remote user equipment; and forward, to the remote user equipment, the reconfiguration message for the remote user equipment.

## Description

### TECHNICAL FIELD

The example and non-limiting embodiments relate generally to communications and, more particularly, to handover in sidelink based UE-to-Network relay communication.

### BACKGROUND

It is known, in sidelink based UE-to-Network relay communication, to handover a relay UE or a remote UE after a handover response has been received at a serving or source base station from a target base station.

### SUMMARY

The following summary is merely intended to be illustrative. The summary is not intended to limit the scope of the claims.

In accordance with one aspect, an apparatus comprising: at least one processor; and at least one memory including computer program code; the at least one memory and the computer program code configured to, with the at least one processor, cause the apparatus at least to: connect to a first base station with one of: a direct connection, or an indirect connection via a first relay user equipment; determine at least one second relay user equipment for receiving a reconfiguration message for path switching to a second base station; establish a sidelink connection with the at least one second relay user equipment; and receive, via the sidelink connection from the at least one second relay user equipment, the reconfiguration message for the path switching to the second base station.

In accordance with one aspect, a method comprising: connecting, with a remote user equipment, to a first base station with one of: a direct connection, or an indirect connection via a first relay user equipment; determining, with the remote user equipment, at least one second relay user equipment for receiving a reconfiguration message for path switching to a second base station; establishing, with the remote user equipment, a sidelink connection with the at least one second relay user equipment; and receiving, with the remote user equipment via the sidelink connection from the at least one second relay user equipment, the reconfiguration message for the path switching to the second base station.

In accordance with one aspect, an apparatus comprising means for performing: connecting to a first base station with one of: a direct connection, or an indirect connection via a first relay user equipment; determining at least one second relay user equipment for receiving a reconfiguration message for path switching to a second base station; establishing a sidelink connection with the at least one second relay user equipment; and receiving, via the sidelink connection from the at least one second relay user equipment, the reconfiguration message for the path switching to the second base station.

In accordance with one aspect, a non-transitory computer-readable medium comprising program instructions stored thereon which, when executed with at least one processor, cause the at least one processor to: cause connection of a remote user equipment to a first base station with one of: a direct connection, or an indirect connection via a first relay user equipment; determine at least one second relay user equipment for receiving a reconfiguration message for path switching to a second base station; cause establishment of a sidelink connection with the at least one second relay user equipment; and cause receiving, via the sidelink connection from the at least one second relay user equipment, of the reconfiguration message for the path switching to the second base station.

In accordance with one aspect, an apparatus comprising: at least one processor; and at least one memory including computer program code; the at least one memory and the computer program code configured to, with the at least one processor, cause the apparatus at least to: receive, from a remote user equipment, a measurement report, wherein the measurement report comprises, at least, a list of candidate relay user equipments discovered with the remote user equipment, wherein a connection between the apparatus and the remote user equipment comprises one of: a direct connection, or an indirect connection via a first relay user equipment; determine to perform path switching for the remote user equipment, wherein the path switching includes changing the connection between the apparatus and the remote user equipment to a connection between a second base station and the remote user equipment via at least one second relay user equipment, based, at least partially, on the measurement report; and transmit, to the remote user equipment, an early reconfiguration message, wherein the early reconfiguration message comprises at least one of: an upper layer protocol configuration from the second base station, at least one security key configuration from the second base station, or an identifier of the at least one second relay user equipment.

In accordance with one aspect, a method comprising: receiving, with a first base station from a remote user equipment, a measurement report, wherein the measurement report comprises, at least, a list of candidate relay user equipments discovered with the remote user equipment, wherein a connection between the first base station and the remote user equipment comprises one of: a direct connection, or an indirect connection via a first relay user equipment; determining, with the first base station, to perform path switching for the remote user equipment, wherein the path switching includes changing the connection between the first base station and the remote user equipment to a connection between a second base station and the remote user equipment via at least one second relay user equipment, based, at least partially, on the measurement report; and transmitting, with the first base station to the remote user equipment, an early reconfiguration message, wherein the early reconfiguration message comprises at least one of: an upper layer protocol configuration from the second base station, at least one security key configuration from the second base station, or an identifier of the at least one second relay user equipment.

In accordance with one aspect, an apparatus comprising means for performing: receiving, from a remote user equipment, a measurement report, wherein the measurement report comprises, at least, a list of candidate relay user equipments discovered with the remote user equipment, wherein a connection between the apparatus and the remote user equipment comprises one of: a direct connection, or an indirect connection via a first relay user equipment; determining to perform path switching for the remote user equipment, wherein the path switching includes changing the connection between the apparatus and the remote user equipment to a connection between a second base station and the remote user equipment via at least one second relay user equipment, based, at least partially, on the measurement report; and transmitting, to the remote user equipment, an early reconfiguration message, wherein the early reconfiguration message comprises at least one of: an upper layer protocol configuration from the second base station, at least one security key configuration from the second base station, or an identifier of the at least one second relay user equipment.

In accordance with one aspect, a non-transitory computer-readable medium comprising program instructions stored thereon which, when executed with at least one processor, cause the at least one processor to: cause receiving, from a remote user equipment, of a measurement report, wherein the measurement report comprises, at least, a list of candidate relay user equipments discovered with the remote user equipment, wherein a connection between a first base station and the remote user equipment comprises one of: a direct connection, or an indirect connection via a first relay user equipment; determine to perform path switching for the remote user equipment, wherein the path switching includes changing the connection between the first base station and the remote user equipment to a connection between a second base station and the remote user equipment via at least one second relay user equipment, based, at least partially, on the measurement report; and cause transmitting, to the remote user equipment, of an early reconfiguration message, wherein the early reconfiguration message comprises at least one of: an upper layer protocol configuration from the second base station, at least one security key configuration from the second base station, or an identifier of the at least one second relay user equipment.

In accordance with one aspect, an apparatus comprising: at least one processor; and at least one memory including computer program code; the at least one memory and the computer program code configured to, with the at least one processor, cause the apparatus at least to: receive, from a second base station, a reconfiguration message, wherein the received reconfiguration message comprises a reconfiguration message for a remote user equipment; establish a sidelink connection with the remote user equipment; and forward, to the remote user equipment, the reconfiguration message for the remote user equipment.

In accordance with one aspect, a method comprising: receiving, with a relay user equipment from a second base station, a reconfiguration message, wherein the received reconfiguration message comprises a reconfiguration message for a remote user equipment; establishing a sidelink connection with the remote user equipment; and forwarding, with the relay user equipment to the remote user equipment, the reconfiguration message for the remote user equipment.

In accordance with one aspect, an apparatus comprising means for performing: receiving, from a second base station, a reconfiguration message, wherein the received reconfiguration message comprises a reconfiguration message for a remote user equipment; establishing a sidelink connection with the remote user equipment; and forwarding, to the remote user equipment, the reconfiguration message for the remote user equipment.

In accordance with one aspect, a non-transitory computer-readable medium comprising program instructions stored thereon which, when executed with at least one processor, cause the at least one processor to: cause receiving, from a second base station, of a reconfiguration message, wherein the received reconfiguration message comprises a reconfiguration message for a remote user equipment; cause establishment of a sidelink connection with the remote user equipment; and cause forwarding, to the remote user equipment, of the reconfiguration message for the remote user equipment.

In accordance with one aspect, an apparatus comprising: at least one processor; and at least one memory including computer program code; the at least one memory and the computer program code configured to, with the at least one processor, cause the apparatus at least to: receive, from a first base station, a handover request for a remote user equipment, wherein the handover request comprises at least one of: an indication of a relay user equipment, or an indication of a list of candidate relay user equipments; transmit, to at least one selected relay user equipment, a reconfiguration message, wherein the transmitted reconfiguration message comprises a reconfiguration message to be forwarded to the remote user equipment; and receive, from the remote user equipment via the at least one selected relay user equipment, a reconfiguration complete message.

In accordance with one aspect, a method comprising: receiving, with a second base station from a first base station, a handover request for a remote user equipment, wherein the handover request comprises at least one of: an indication of a relay user equipment, or an indication of a list of candidate relay user equipments; transmitting, with the second base station to at least one selected relay user equipment, a reconfiguration message, wherein the transmitted reconfiguration message comprises a reconfiguration message to be forwarded to the remote user equipment; and receiving, with the second base station from the remote user equipment via the at least one selected relay user equipment, a reconfiguration complete message.

In accordance with one aspect, an apparatus comprising means for performing: receiving, from a first base station, a handover request for a remote user equipment, wherein the handover request comprises at least one of: an indication of a relay user equipment, or an indication of a list of candidate relay user equipments; transmitting, to at least one selected relay user equipment, a reconfiguration message, wherein the transmitted reconfiguration message comprises a reconfiguration message to be forwarded to the remote user equipment; and receiving, from the remote user equipment via the at least one selected relay user equipment, a reconfiguration complete message.

In accordance with one aspect, a non-transitory computer-readable medium comprising program instructions stored thereon which, when executed with at least one processor, cause the at least one processor to: cause receiving, with a base station from a first base station, of a handover request for a remote user equipment, wherein the handover request comprises at least one of: an indication of a relay user equipment, or an indication of a list of candidate relay user equipments; cause transmitting, with the base station to at least one selected relay user equipment, of a reconfiguration message, wherein the transmitted reconfiguration message comprises a reconfiguration message to be forwarded to the remote user equipment; and cause receiving, with the base station from the remote user equipment via the at least one selected relay user equipment, of a reconfiguration complete message.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2a is a diagram illustrating features as described herein;
FIG. 2b is a diagram illustrating features as described herein;
FIG. 3 is a diagram illustrating features as described herein;
FIG. 4 is a diagram illustrating features as described herein;
FIG. 5 is a flowchart illustrating steps as described herein;
FIG. 6 is a flowchart illustrating steps as described herein;
FIG. 7 is a flowchart illustrating steps as described herein; and
FIG. 8 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AMF: access and mobility management function
- CP: control plane
- C-RNTI: cell radio network temporary identifier
- CU: central unit
- D2D: device to device
- DRB: data radio bearer
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the LTE, and acting as secondary node in EN-DC
- E-UTRA: evolved universal terrestrial radio access, i.e., the LTE radio access technology
- gNB (or gNodeB): base station for 5G/NF, i.e., a node providing NR user plane and control plane protocol terminations towards the LTE, and connected via the NG interface to the 5GC
- HO: handover
- I/F: interface
- IoT: Internet of Things
- L1: layer 1
- LTE: long term evolution
- MAC: medium access control
- MME: mobility management entity
- ng or NG: new generation
- ng-eNB or NG-eNB: new generation eNB
- NR: new radio
- N/W or NW: network
- PC5: LTE-LTE interface for sidelink
- PDCP: packet data convergence protocol
- PHY: physical layer
- ProSe: proximity service
- RAN: radio access network
- RF: radio frequency
- RLC: radio link control
- RLF: radio link failure
- RRC: radio resource control
- RRH: remote radio head
- RS: reference signal
- RSRP: reference signal received power
- RU: radio unit
- Rx: receiver
- SDAP: service data adaptation protocol
- SGW: serving gateway
- SL: sidelink
- SMF: session management function
- SRAP: sidelink relay adaptation protocol
- S-TMSI: SAE temporary mobile subscriber identity
- TB: transport block
- Tx: transmitter
- U2N: LTE to Network
- UE: user equipment (e.g., a wireless, typically mobile device)
- UP: user plane
- UPF: user plane function
- V2I: vehicle to infrastructure
- V2N: vehicle to network
- V2P: vehicle to pedestrian
- V2V: vehicle to vehicle
- V2X: vehicle to everything

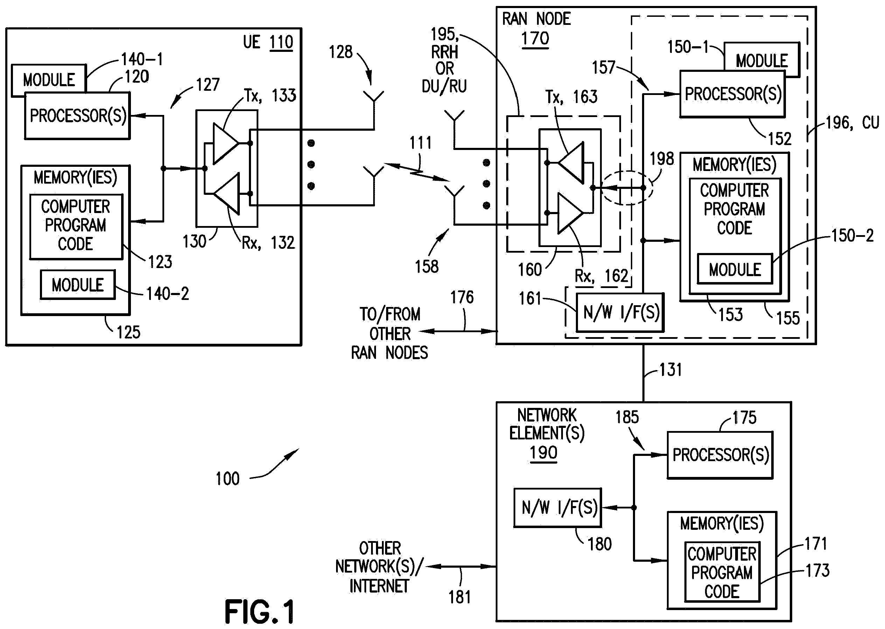

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

If wireless communication with a network is unavailable or not possible, or in addition to network communication, the UE 110 may be capable of sidelink communication with other UEs. For example, the UE 110 may perform sidelink communication with another UE which may include some or all of the features of UE 110, and/or may include additional features. Optionally, the UE 110 may also communicate with other UEs via short range communication technologies, such as Bluetooth^{®}.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions. In addition, various embodiments of the user equipment 110 can include, but are not limited to, devices integrated into vehicles, infrastructure associated with vehicular travel, wearable devices used by pedestrians or other non-vehicular users of roads, user equipment unrelated to traffic users, and user equipment configured to participate in sidelink scenarios, such as public safety user equipment and/or other commercial user equipment.

Having thus introduced one suitable but non-limiting technical context for the practice of the example embodiments of the present disclosure, example embodiments will now be described with greater specificity.

Features as described herein generally relate to, while not being limited to, new radio (NR) sidelink (SL) enhancements. For example, NR SL methods may be implemented to provide communication between a vehicle and a network, infrastructure(s), other vehicle(s), or other road user(s) in the surrounding/immediate area. Such communication may enable proximity service (ProSe), or transmission of information about the surrounding environment, between devices in close proximity, for example device-to-device (D2D) communication technology. Such direct communication may be available even when network coverage is unavailable. Additionally or alternatively, NR SL methods may be implemented in scenarios unrelated to traffic users, such as public safety scenarios and/or commercial scenarios.

Additionally or alternatively, NR SL methods may relate to Internet of Things (IoT) and automotive industries (e.g., for reduction of accident risk and safer driving experiences). These use cases may include a message exchange among vehicles (V2V), vehicles and pedestrians (V2P), vehicles and infrastructure (V2I) and vehicles and networks (V2N), and may be referred to as vehicle-to-everything (V2X). The allocation of V2V resources in cellular, i.e., time and frequency resources, can be either controlled by the cellular network structure or performed autonomously by the individual vehicles (e.g. UE devices thereof). Sidelink may use same or different carrier frequencies or frequency bands than cellular communication.

Enhancements to sidelink procedures may be applicable in these V2X and other use cases. It should be noted that enhancements to sidelink procedures may not be limited to unicast procedures; a person of ordinary skill in the art would understand that the present disclosure may relate to sidelink groupcast, multicast, and/or broadcast procedures as well.

Features as described herein generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for supporting service continuity during inter-gNB mobility using sidelink communication.

Sidelink relay may include sidelink-based UE-to-network (UE-to-NW) relay where a relay UE relays traffic between a remote UE and the network, or sidelink-based UE-to-UE relay where a relay UE relays the traffic between a first remote UE (e.g., source UE) and a second remote UE (e.g., destination UE).

Features as described herein generally relate to NR sidelink (SL) Relay enhancement to enhance service continuity for single-hop L2 UE-to-NW relay for the following scenarios: (A) Inter-gNB indirect-to-direct path switching (i.e., "remote UE <-> relay UE A <-> gNB X" to "remote UE <-> gNB Y"); (B) Inter-gNB direct-to-indirect path switching (i.e., "remote UE <-> gNB X" to "remote UE <-> relay UE A <-> gNB Y"); (C) Intra-gNB indirect-to-indirect path switching (i.e., "remote UE <-> relay UE A <-> gNB X" to "remote UE <-> relay UE B <-> gNB X") ; and (D) Inter-gNB indirect-to-indirect path switching (i.e., "remote UE<-> relay UE A <-> gNB X" to "remote UE <-> relay UE B <-> gNB Y").

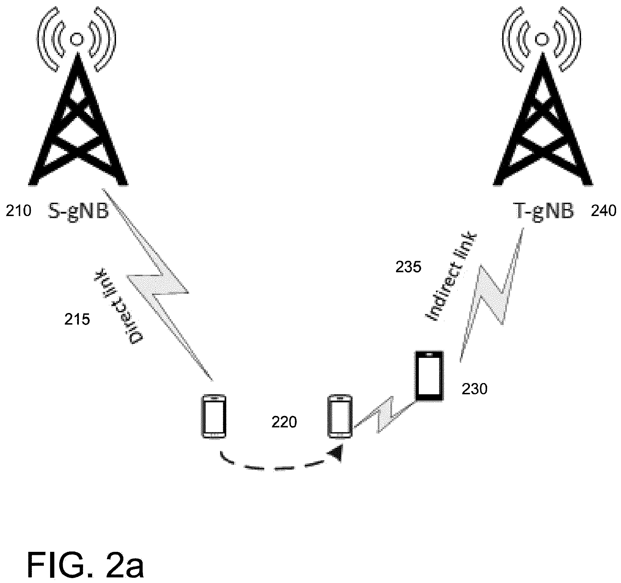

Example embodiments of the present disclose may relate to scenarios B and D, in which a remote UE switches to an indirect path, via relay UE, to the target gNB, as illustrated in FIG. 2a. However, example embodiments of the present disclosure may also relate to other handover scenarios as well.

In the present disclosure, the terms "serving gNB," "current gNB,", "S-gNB," "gNB_s," "serving base station," and "source gNB" may be used interchangeably to refer to the base station to which a (remote) UE is directly or indirectly connected before path switching is performed. Where reference is made to one of these terms, it should be understood that any of these interchangeable terms may be properly substituted.

In the present disclosure, the term "remote UE" may be used to refer to a UE for which a serving gNB has determined to perform path switching.

In the present disclosure, the terms "target relay UE," "relay UE_t," "selected target relay UE," and "relay UE" may be used interchangeably to refer to a UE which is selected to enable a (remote) UE to indirectly connect to a (target) base station via sidelink based U2N relay. Where reference is made to one of these terms, it should be understood that any of these interchangeable terms may be properly substituted.

In the present disclosure, the terms "gNB_t," "T-gNB," "target gNB," and "target base station" may be used interchangeably to refer to a base station to which a (remote) UE is intended to be indirectly connected after path switching is performed. Where reference is made to one of these terms, it should be understood that any of these interchangeable terms may be properly substituted.

Referring now to FIG. 2a, illustrated is an example in which a remote UE performs inter-gNB path switching from direct path to indirect path (i.e. scenario B). The UE (220) may be served by a source gNB, S-gNB (210), via a direct link (215). The UE (220) may then switch to a connection with a target gNB, T-gNB (240), with an indirect link (235) via a sidelink connection with a relay UE (230). The indirect link may consist of a SL or PC5 link between the remote UE and the relay UE and a Uu link between the relay UE and serving gNB. The UE (220) may be a remote UE; a remote UE may be a UE that is not directly connected to a base station, but rather is connected, via sidelink, to a relay UE that is directly connected to a base station.

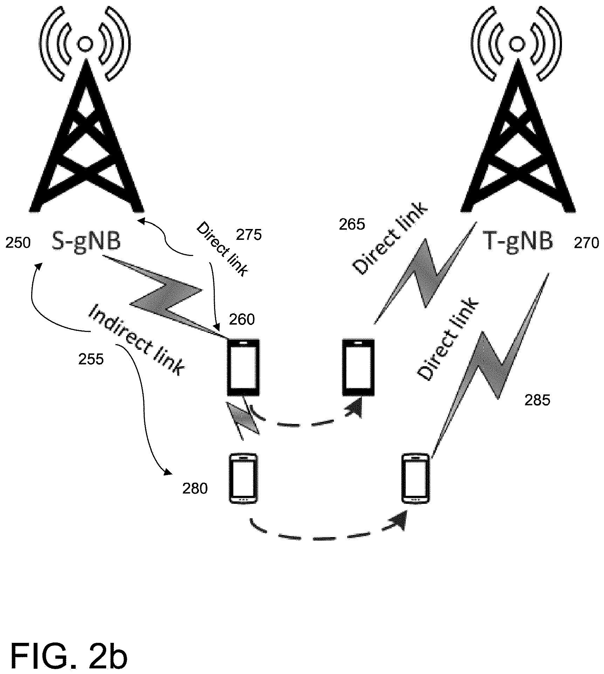

Referring now to FIG. 2b, illustrated is an example in which a remote UE (280) switches from being indirectly linked (255) to a serving base station (250) via a relay UE (260) to being directly linked (285) to a target base station (270) (i.e. scenario A, inter-gNB indirect to direct path switching). Also illustrated is an example in which a relay UE (260) switches from being directly linked (275) to a serving base station (250), while serving as a relay for another remote UE (280), to being directly linked to a target base station (270) (i.e. inter gNB switching).

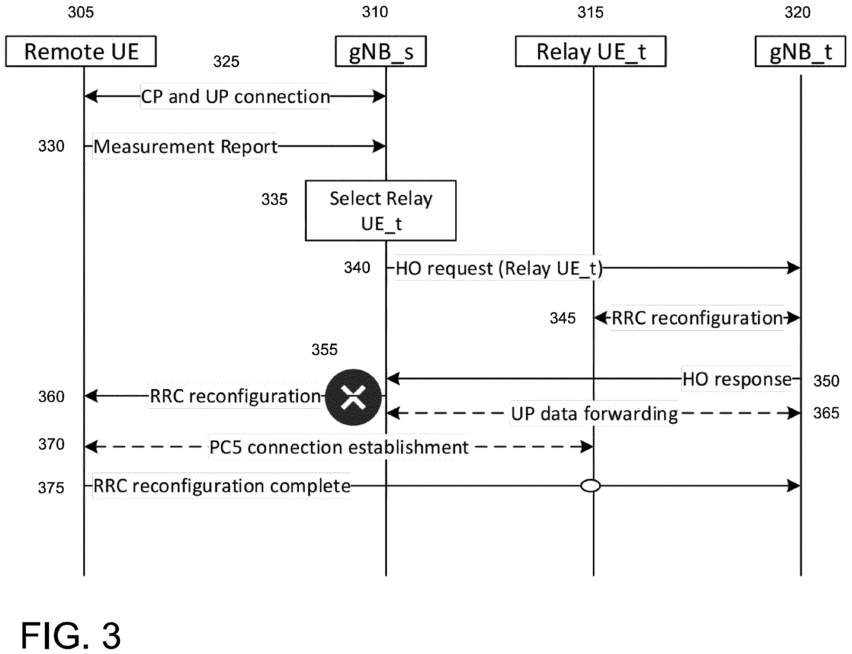

FIG. 3 illustrates a (conventional) procedure for inter-gNB path switching from a direct path to an indirect path. A control plane (CP) and a user plane (UP) connection (325) may exist between a remote UE (305) and a current serving gNB or Source gNB, gNB_s (310) (i.e. direct path). When the current serving gNB (i.e. gNB_s (310) in FIG. 3) of the remote UE (305) triggers the relay reselection (335) for the remote UE upon receiving measurement report (330) from the remote UE, the selected target relay UE (315) may be served by another neighboring gNB (i.e. gNB_t (320) in FIG. 3). In this case, inter-gNB path switching for the remote UE (305) may be initiated by the gNB_s (310) using, for example, a handover (HO) preparation procedure over Xn interface towards the target gNB (i.e. gNB_t (320)). When gNB_t (320) receives HO request (340) in which the selected target relay UE (i.e. Relay UE_t (315) in FIG. 3) is indicated, gNB_t (320) may need to initiate an RRC reconfiguration procedure (345) to relay UE_t (315) in order to make sure the configuration on L2 U2N relay to relay UE_t (315) can be accepted by relay UE_t (315). Only after a successful RRC reconfiguration procedure (345) can gNB_t (320) send a HO response message (350) back to gNB_s (310). The gNB_s (310) may then perform RRC reconfiguration (360) of the remote UE (305) on behalf of the gNB_t (320), and perform UP data forwarding to the gNB_t (320) for the remote UE (305) . A PC5 connection (UE to UE interface for sidelink communication) may be established (370) between the remote UE (305) and the relay UE_t (315), and the remote UE (305) may transmit an RRC reconfiguration complete message (375) to the gNB_t (320) via relay with relay UE_t (315) (i.e. indirect path).

The additional RRC reconfiguration procedure (345) between gNB_t (320) and relay UE_t (315) may prolong the HO preparation procedure between gNB_s (310) and gNB_t (320) for the remote UE (305), when compared with the (normal) HO scenario in which the UE is handed-over from gNB_s (310) to gNB_t (320) both using direct path (i.e. no relay between remote UE and another relay UE to a base station). During the prolonged HO preparation phase, the remote UE (305) may move out of coverage of current serving cell or, i.e., gNB_s (310) before or when HO response (350) is received from gNB_t (320). In other words, the possibility of the remote UE (305) missing (355) the RRC reconfiguration message (360) transmitted from gNB_s (310) for configuration of path switching to gNB_t (320) via relay UE_t (315) may become higher than in a (normal) HO scenario. Missing/not receiving the RRC reconfiguration message with HO/path switching command (355) may cause a HO/path switching failure, which may in turn impact the remote UE's service continuity.

FIG. 3 illustrates the inter-gNB path switching from direct path to indirect path (i.e. scenario B), but indirect path to indirect path switching between different gNBs is also possible (i.e. scenario D). In the case of indirect path to indirect path switching, the prolonged HO preparation procedure may cause even more path switching failure, either because the PC5 connection between the remote UE and the source relay UE may fail, or the source relay UE's Uu connection may fail during the prolonged HO preparation procedure.

Example embodiments of the present disclosure may relate to potential failures due to inter-gNB path switching failure, which may impact the service continuity of a remote UE during inter-gNB path switching (e.g. scenario B, scenario D, etc.).

A remote UE performs relay reselection and Uu RRC reestablishment during inter-gNB path switching after detection of PC5 RLF or Uu RLF, if inter-gNB path switching is not supported over Xn interface or PC5 RLF or relay UE's Uu RLF happens during inter-gNB path switching. However, the remote UE's service continuity will be impacted, as the remote UE needs to first wait until PC5 RLF or Uu RLF is identified, and then make relay reselection and initiate RRC reestablishment procedure. During an RRC reestablishment procedure, the reselected relay UE may also need to be re-configured for providing L2 U2N relay functions to the remote UE. All of these procedures may introduce additional service interruption time for the remote UE.

A relay UE can be selected to assist the remote UE for UL/DL data transmission to the target cell temporarily, during the remote UE's synchronization to the target cell using RACH procedure for HO from the source cell to the target cell. However, this solution still has an issue with missing of the RRC reconfiguration message (HO command) due to a prolonged HO preparation procedure caused by configuring the target relay UE from the target cell.

A technical effect of example embodiments of the present disclosure may be to address the identified problem of missing the RRC reconfiguration message (e.g. HO command) due to prolonged HO preparation procedure.

In an example embodiment, the selected target relay UE may be configured by the target gNB to assist the remote UE for inter-gNB path switching to an indirect path, either as a path switching failure recovery procedure or as a normal path switching procedure.

In an example embodiment, the selected target relay UE may be configured by the target gNB with the remote UE's RRC reconfiguration information (i.e. related to the indirect path switching). This may enable/allow the relay UE to forward, to the remote UE, the relevant RRC reconfiguration information after the PC5 connection is established between the target relay UE and the remote UE.

In an example embodiment, the source gNB may only indicate a list of candidate relay UEs that are connected to the target gNB, and, optionally, may indicate the selected temporary target relay UE for forwarding the remote UE's RRC reconfiguration related to the indirect path switching to the target gNB. In this example embodiment, the target gNB may make the final selection of the target relay UE (i.e. among the list of candidate relay UEs) that should be used by the remote UE to connect to the target gNB via an indirect path.

In an example embodiment, to facilitate PC5 connection establishment between the remote UE and the selected target relay UE as well as reception of RRC reconfiguration message from the target gNB indirectly via the selected target relay UE, even if transmission of RRC reconfiguration message from the source gNB to the remote UE is delayed or fails due to prolonged HO preparation procedure, one of the two following options, option #1 and option #2, may be used/implemented.

In option #1, an early RRC reconfiguration message, to indicate the selected target relay UE and optionally the upper layer radio (e.g. L2 and/or L3) protocol (e.g. SDAP, PDCP) including security keys configuration configured by target gNB for reception of normal RRC reconfiguration message forwarded by the selected target relay UE, may be sent to the remote UE by the source gNB before or during the HO preparation procedure. The early RRC reconfiguration message may be reduced in comparison with, for example, the RRC reconfiguration message received by the remote UE in FIG. 3 (i.e. 360). To facilitate the source gNB to send the early RRC reconfiguration message, the target gNB may send an early HO response message, for example before the target gNB initiates the RRC reconfiguration procedure to the selected target relay UE. It may be noted that the early HO response message is optional; in an example embodiment, no early HO response message may be transmitted. The early HO response message may include an upper layer radio protocol and security key configuration for the remote UE to receive the RRC reconfiguration message from the target gNB, forwarded by the selected target relay UE. That is, the early RRC reconfiguration message may be based on (e.g. contents thereof are included in) the early HO response message. The early RRC reconfiguration message may trigger the remote UE to establish a PC5 connection with the selected relay UE. In other words, the early RRC reconfiguration message may be used by the remote UE while waiting for the full RRC reconfiguration message (e.g. 355). The remote UE may determine to proceed with handover using the early RRC reconfiguration message if the full RRC reconfiguration message is not received within a configured time period, or if the configured condition(s) (e.g. Uu or PC5 link Reference Signal Received Power (RSRP)) are fulfilled, or if the current relay UE sends the HO notification to the remote UE in case the remote UE is currently using an indirect path to connect to the source gNB (i.e. scenario D).

In option #2, the selected relay UE may be configured by the target gNB to proactively communicate with the remote UE over SL so as to forward RRC reconfiguration from the target gNB to the remote UE. In one example, the selected relay UE may announce assistance information for the remote UE in a sidelink message, such as a relay discovery message, which may trigger the remote UE to establish the PC5 connection with the selected relay UE. In another example, the selected relay UE may be configured to initiate a PC5 connection establishment with the remote UE and, along with that, indicate the assistance information to the remote UE (e.g. without transmitting the sidelink message (e.g. relay discovery message)). The sidelink message may include a sidelink connection establishment request (e.g. Direct Communication Request in current standards) message.

In an example embodiment, upon PC5 connection established between the remote UE and the selected relay UE, the remote UE's RRC reconfiguration information related to indirect path switching (e.g. PC5 configuration, traffic mapping etc.) (as configured for the remote UE and sent to the selected relay UE by the target gNB) may be forwarded from the relay UE to the remote UE. If the early HO response message includes upper layer radio protocol configuration for the target gNB to send the RRC reconfiguration message via the selected relay UE, the remote UE's RRC reconfiguration information, transmitted to the remote UE via the relay UE, may apply the configured upper layer radio protocol configuration so that the remote UE can receive the information correctly. Or, the remote UE's RRC reconfiguration information forwarded by the relay UE from the target gNB, may use the default or specified upper layer radio protocol configuration, or may use the same configuration as configured in the source gNB if the source gNB indicates the corresponding configuration in an HO preparation message such as an HO Request (340). If security keys configured by the target gNB are not provided to the remote UE in the early RRC reconfiguration message, the transmission of the remote UE's reconfiguration information, via the relay UE, should not be ciphered. Upon receiving the RRC reconfiguration information forwarded from the relay UE, the remote UE may use the corresponding configuration to set up the indirect path, via the selected relay UE to the target gNB, for continuing the ongoing service, even if the remote UE cannot/does not receive the full RRC reconfiguration message from the source gNB (e.g. 360, 355).

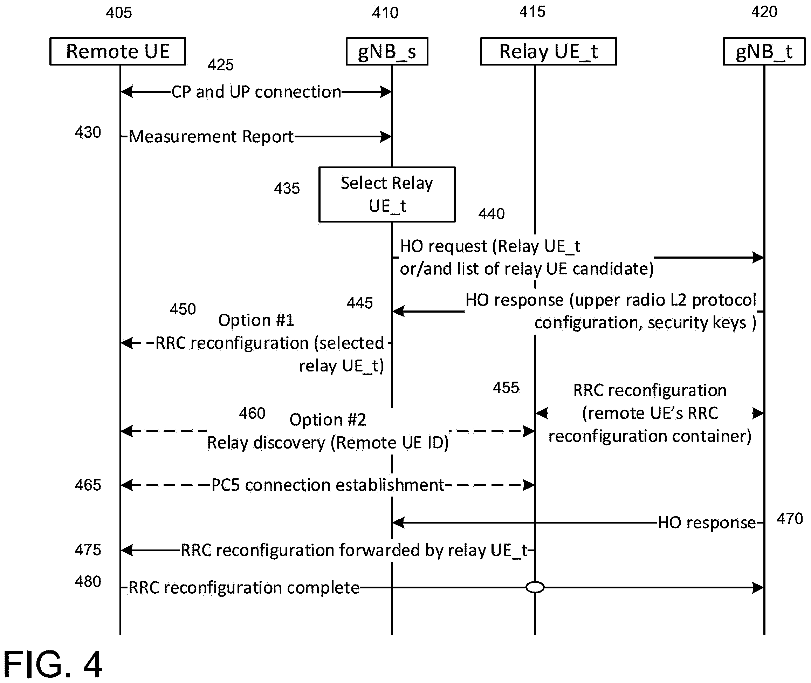

Referring now to FIG. 4, illustrated is an example embodiment for inter-gNB path switching.

In an example, as the initial phase, a remote UE (405) may have a connection with a source gNB (410) in both the control plane (CP) and the user plane (UP) (425), either directly (as shown in FIG. 4) or indirectly via a (serving) relay UE using L2 U2N relay solution (not shown in FIG. 4). Based on the measurement report (430) (which may include the measurement results of Uu link as well as measured SL RSRP towards the discovered candidate relay UEs) from the remote UE (405), the source gNB (i.e. gNB_s (410) in FIG. 4) may make the decision to perform path switching for the remote UE (405) to an indirect path via a selected target relay UE (i.e. Relay UE_t (415) in FIG. 4). The measurement report (430) may include a list of candidate relay UEs discovered with the remote UE (405) for connection with the remote UE (405). As the serving or camping cell of the selected target relay UE is the neighboring cell controlled by target gNB (i.e. gNB_t (420) in FIG. 4) instead of the current serving gNB (410) of the remote UE (405), the source gNB (410) may initiate the HO preparation procedure to the target gNB (420) to indicate the remote UE's context, as well as the selected target relay UE, for preparing the path switching (435). In the example of FIG. 4, the existing HO preparation procedure may be used (with enhancement according to example embodiments of the present disclosure). Alternatively, a new procedure of path switching preparation may be introduced (with enhancement according to example embodiments of the present disclosure); however, the information elements may be similar to those of the HO preparation procedure message(s). In an example embodiment, the HO request (440) or alternative path switching request message may include an additional information element, comprising an indication of the selected target relay UE (e.g. selected target relay UE's ID).

In another example embodiment, the source gNB (410) may not select the target relay UE (415), but may instead indicate a list of candidate relay UEs that are connected to or under control of the target gNB (420) in the HO/path switching request message (440). The relay UE_t (415) may be one of the plurality of candidate relay UEs included in the list. In this example embodiment, the target gNB (420) may make the final target relay UE selection from the candidate relay UE list indicated by the source gNB (410). Optionally, the source gNB (410) may also select a temporary target relay UE that may be configured to the remote UE (405), for example via an early RRC reconfiguration message (450) from the source gNB (410). The selected temporary target relay UE may be used to forward, to the remote UE (405), the RRC reconfiguration message related to the indirect path configuration from the target gNB (420). The target gNB may select the same target relay UE (i.e. the selected temporary target relay UE) or a different target relay UE than that selected by the source gNB (410) as the temporary relay UE. For example, the remote UE (405) may receive an RRC reconfiguration message related to the indirect path configuration from the target gNB (420), as forwarded to the remote UE by the selected temporary target relay UE, and then may be configured to communicate with an indirect path to the gNB_t (420) via a different relay UE (e.g. 415). In other words, the relay UE_t (415) selected by the gNB_t (420) may or may not be the same as the temporary target relay UE selected by the gNB_s (410).

In an example embodiment, a target gNB may use a second relay UE, which may be selected from a list of candidate relay UEs indicated by the source gNB, to relay an RRC reconfiguration message to the remote UE. The RRC reconfiguration message may indicate another, different relay UE (e.g. from the list of candidate relay UEs) to which the remote UE may transmit an RRC reconfiguration complete message (i.e. establish a sidelink connection with the target gNB). The relay UE that transmitted the RRC reconfiguration message to the remote UE may be considered a "temporary" relay UE, while the relay UE indicated within the RRC reconfiguration message may be considered the "selected" relay UE. A technical effect of this example embodiment may be to enable an RRC reconfiguration message to be received by the remote UE from the target gNB as soon as possible. In an example embodiment, the temporary relay UE may already be in an RRC_CONNECTED state with respect to the target gNB, and thus may not need to undergo an RRC connection procedure with the target gNB; the selected relay UE may require RRC connection to be performed (i.e. may be in an RRC_IDLE or RRC_INACTIVE state at the time the target gNB receives the HO request), which may take more time. The temporary relay UE may be serving other relay UEs.

Upon receiving the indication of the selected target relay UE from the source gNB (410), for example with the HO request (440), or upon selecting of the target relay UE from the candidate relay UE list that was received from the source gNB (410) along with the HO request, the target gNB (420) may initiate an RRC reconfiguration procedure (455) to the target relay UE (415) for L2 U2N relay related configuration (e.g. the configured Uu radio link control (RLC) channels, PC5 RLC channels, Uu sidelink relay adaptation protocol (SRAP) and PC5 SRAP for traffic mapping, etc.) for the remote UE (405). Additionally, the target gNB (420) may also include the remote UE's RRC reconfiguration container (e.g. the configuration of end-to-end SRBs/DRBs, the PC5 RLC channels, PC5 SRAP for traffic mapping, local remote UE ID, etc.) in the same RRC reconfiguration message (455) to the target relay UE, which may enable/allow the target relay UE (415) to forward (475) the remote UE related RRC reconfiguration message to the remote UE (405) as soon as a PC5 connection is established (465) between the remote UE (405) and the target relay UE (415), for example as part of a sidelink control message. This may be especially beneficial if the remote UE (405) does not or cannot receive the full RRC reconfiguration message from the source gNB (410).

To facilitate the remote UE (405) in identifying the right target relay UE for path switching to indirect path, one option is to indicate the selected target relay UE to the remote UE (405) using early RRC reconfiguration message (450) even before getting an HO/path switching response (470) from the target gNB (420) or, optionally, after getting an early HO/path switching response from the target gNB (445). In another example embodiment, no early HO/path switching response may be received, and the source gNB may transmit the early RRC reconfiguration message (450) without receiving the early HO/path switching response. The early RRC reconfiguration message (450) may not contain the full RRC reconfiguration information, as some information has not been received from the target gNB (420), but it may include enough information to enable the establishment of the PC5 connection (465) with the selected target relay UE (415) as well as receiving the RRC reconfiguration message from the target gNB (420), forwarded by the target relay UE (415). For instance, the early RRC reconfiguration message (450) may include at least one of the information on the UE ID of temporary selected relay UE, the PC5 configuration (e.g. PC5 RLC channel, SRAP) and/or the upper layer radio protocol configuration for establishing the PC5 connection with the selected target relay UE (465) and reception of the remote UE's RRC reconfiguration message (475) from the target gNB (420) via the selected target relay UE (415).

To facilitate the source gNB (410) in getting the information of the PC5 configuration and upper layer radio protocol configuration, the target gNB (420) may send the (optional) early HO response (445) to the source gNB (410), including that information before the target gNB (420) initiates an RRC reconfiguration procedure (455) with the selected relay UE (415). As the early indication (450) of the selected target relay UE (415) may be provided right after the source gNB (410) makes a HO or path switching decision without waiting for prolonged HO/path switching preparation procedure (440, 470), the probability of missing the early indication (450) may become lower. The remote UE (405) may trigger the establishment of the PC5 connection (465) with the selected target relay UE (415) and get the forwarded RRC reconfiguration message on HO/path switching (475) from the target relay UE (415). In an example embodiment, the remote UE (405), after receiving the early RRC reconfiguration message (450), may still remain connected to the current serving gNB (410), if possible, until it receives the full RRC reconfiguration (475).

In another example embodiment, in option #2, the selected target relay UE (415) may be configured to indicate assistance information in the discovery message (460) to facilitate/enable the remote UE (405) to identify the target relay UE (415). The assistance information may be, for example, the remote UE's ID (e.g. remote UE ID used in PC5 connection or SL discovery, or remote UE's C-RNTI in the source cell allocated to the remote UE by the source gNB and cell ID of the source cell, remote UE's 5G-S-TMSI, or remote UE's C-RNTI in the target cell allocated to the remote UE by the target gNB using the early HO response (445) and then configured to the remote UE by the source gNB using the early RRC reconfiguration message (450), etc.) to allow the remote UE (405) to identify the relay UE (415) having the remote UE's configuration container information. Alternatively, the target relay UE (415) may proactively initiate PC5 connection with the remote UE (405) without transmitting the discovery message (460). In other words, the remote UE (405) may not need to receive the discovery message (460) because the target relay UE (415) is capable of initiating the PC5 connection with the remote UE (405).

Upon identifying the selected target relay UE (415) for path switching to an indirect path, the remote UE (405) may establish a PC5 connection (465) with the target relay UE (415), for example if the PC5 connection does not yet exist. When the PC5 connection is established, the remote UE's RRC reconfiguration information, related to HO/path switching to the target gNB (420) via an indirect path, may be forwarded (475) from the target relay UE (415) to the remote UE (405). The remote UE may apply the upper layer radio protocol configuration and security keys provided in the early RRC reconfiguration message (450) transmitted from the source gNB (410) to receive the RRC reconfiguration information (475) forwarded from the target relay UE (415). If the early RRC reconfiguration (450) is not received, or the received early RRC reconfiguration does not provide the upper layer radio protocol configuration and/or security keys, the remote UE (405) may apply the existing configuration configured from the source cell gNB_s for receiving the RRC reconfiguration information forwarded from the target relay UE (415). In the latter case, the target gNB (420) may get/receive the existing configuration from the source gNB (410) in, for example, an HO request message (440) and may use the existing configuration for sending the RRC reconfiguration information (475) to the remote UE (405) via the relay UE (415). The remote UE's RRC reconfiguration information may be forwarded to the remote UE (405) as soon as the PC5 connection is established (465, 475) and the remote UE (405) may respond with an RRC reconfiguration complete message (480) towards the target gNB (420), although it may not have received the RRC reconfiguration with synchronization/HO command (450) from the source gNB (410).

In an example embodiment, forwarding of the remote UE's RRC reconfiguration information (475) may only be initiated if the remote UE (405) did not receive the RRC reconfiguration message related to HO/path switching (450) from the source gNB (410). In this case, the procedure of remote UE's RRC reconfiguration information forwarding (475) may be considered as the HO/path switching failure recovery procedure. Alternatively, the forwarding of the remote UE's RRC reconfiguration information (475) may be initiated as part of normal HO/path switching procedure so that source gNB (410) does not need to initiate an RRC reconfiguration procedure (450) to remote UE (405) for HO/path switching. In this case, the full HO response message from the target gNB (420) to the source gNB (410) may be omitted (470). Instead, the remote UE context release message (not illustrated), as discussed below, may be sent from the target gNB (420) to the source gNB (410) as the response to the HO request (440).

After getting the forwarded RRC reconfiguration message (475), the remote UE (405) may respond to the target gNB with an RRC reconfiguration complete message (480) via the target relay UE (415) using the configuration provided in the RRC reconfiguration message. After this, the remote UE (405) may successfully switch to the target gNB (420) using an indirect path via the target relay UE (415). Then, the target gNB (420) may send, to the source gNB (410), a UE context release message, as in legacy HO procedure(s), to release the remote UE context from the source gNB (410) (not illustrated in FIG. 4) and from the source relay UE, if the remote UE (405) was also using an indirect path in the source gNB (410) (not illustrated in FIG. 4).

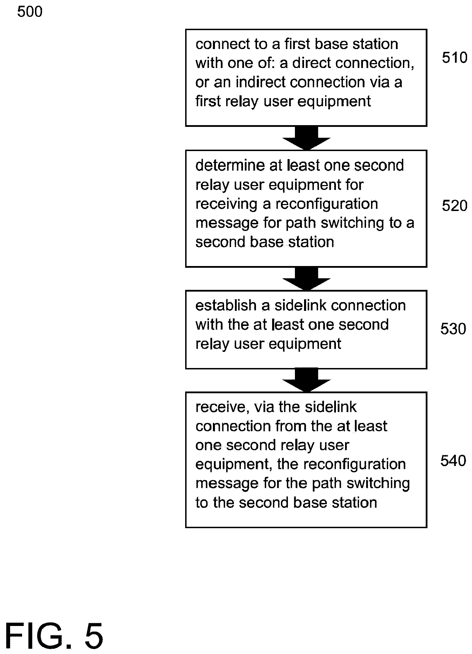

FIG. 5 illustrates the potential steps of an example method 500. The example method 500 may include: connecting, with a relay user equipment, to a first base station with one of: a direct connection, or an indirect connection via a first relay user equipment, 510; determining, with the relay user equipment, at least one second relay user equipment for receiving a reconfiguration message for path switching to a second base station, 520; establishing, with the relay user equipment, a sidelink connection with the at least one second relay user equipment, 530; and receiving, with the relay user equipment via the sidelink connection from the at least one second relay user equipment, the reconfiguration message for the path switching to the second base station, 540. The relay user equipment may be, for example, a remote relay user equipment.

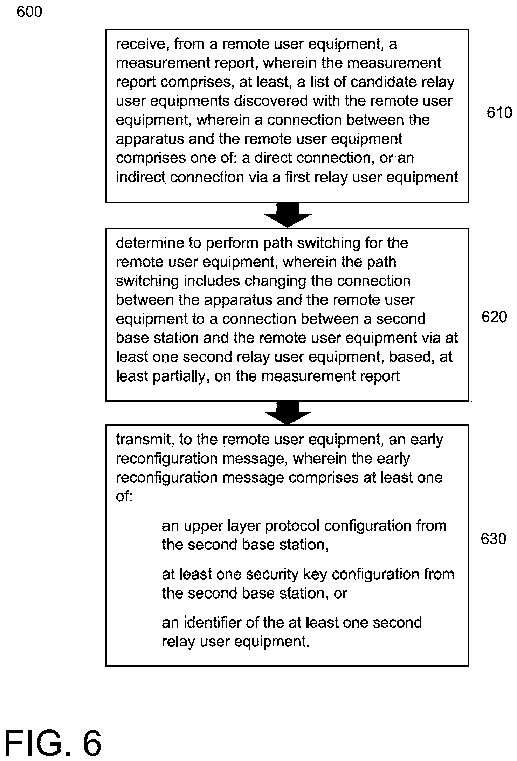

FIG. 6 illustrates the potential steps of an example method 600. The example method 600 may include: receiving, at a first base station from a remote user equipment, a measurement report, wherein the measurement report comprises, at least, a list of candidate relay user equipments discovered with the remote user equipment, wherein a connection between the first base station and the remote user equipment comprises one of: a direct connection, or an indirect connection via a first relay user equipment, 610; determining, with the first base station, to perform path switching for the remote user equipment, wherein the path switching includes changing the connection between the first base station and the remote user equipment to a connection between a second base station and the remote user equipment via at least one second relay user equipment, based, at least partially, on the measurement report, 620; and transmitting, with the first base station to the remote user equipment, an early reconfiguration message, wherein the early reconfiguration message comprises at least one of: an upper layer protocol configuration from the second base station, at least one security key configuration from the second base station, or an identifier of the at least one second relay user equipment, 630.

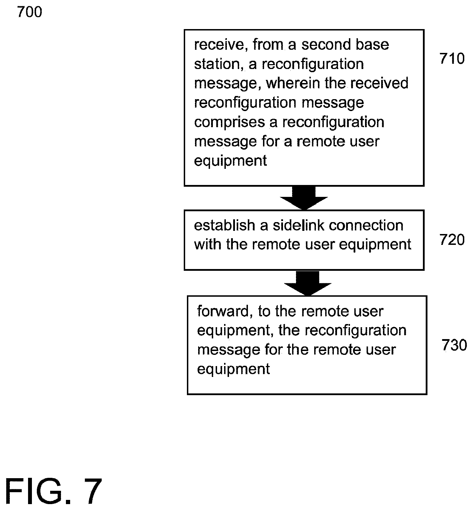

FIG. 7 illustrates the potential steps of an example method 700. The example method 700 may include: receiving, with a relay user equipment from a second base station, a reconfiguration message, wherein the received reconfiguration message comprises a reconfiguration message for a remote user equipment, 710; establishing, with the relay user equipment, a sidelink connection with the remote user equipment, 720; and forwarding, with the relay user equipment to the remote user equipment, the reconfiguration message for the remote user equipment, 730.

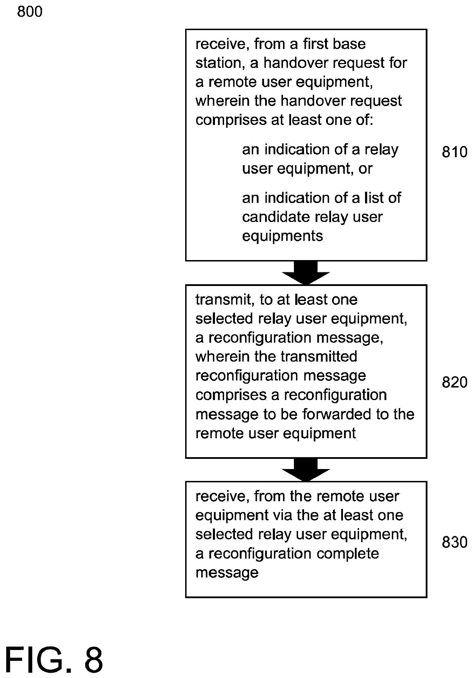

FIG. 8 illustrates the potential steps of an example method 800. The example method 800 may include: receiving, with a base station from a first base station, a handover request for a remote user equipment, wherein the handover request comprises at least one of: an indication of a relay user equipment, or an indication of a list of candidate relay user equipments, 810; transmitting, with the base station to at least one selected relay user equipment, a reconfiguration message, wherein the transmitted reconfiguration message comprises a reconfiguration message to be forwarded to the remote user equipment, 820; and receiving, with the base station from the remote user equipment via the at least one selected relay user equipment, a reconfiguration complete message, 830.

In accordance with one example embodiment, an apparatus may comprise: at least one processor; and at least one memory including computer program code; the at least one memory and the computer program code configured to, with the at least one processor, cause the apparatus at least to: connect to a first base station with one of: a direct connection, or an indirect connection via a first relay user equipment; determine at least one second relay user equipment for receiving a reconfiguration message for path switching to a second base station; establish a sidelink connection with the at least one second relay user equipment; and receive, via the sidelink connection from the at least one second relay user equipment, the reconfiguration message for the path switching to the second base station.

The reconfiguration message may comprise a radio resource control reconfiguration message.

The path switching may be based, at least partially, on the reconfiguration message.

The at least one second relay user equipment may comprise one of: a second relay user equipment, or the second relay user equipment and a third relay user equipment, wherein the reconfiguration message may comprise a reconfiguration message received: from the second base station at the third relay user equipment, from the second base station at the second relay user equipment, and from the second relay user equipment at the apparatus, wherein the path switching may comprise, at least, changing the connection between the apparatus and the first base station to connection between the apparatus and the second base station via the at least one second relay user equipment.

The at least one second relay user equipment may comprise one of: a relay user equipment among a plurality of candidate relay user equipments indicated from the first base station, or a relay user equipment among a plurality of candidate relay user equipments selected at the second base station.

Determining the at least one second relay user equipment may comprise the example apparatus being further configured to: receive, from the first base station, an early reconfiguration message, wherein the early reconfiguration message may comprise at least one of: an upper layer protocol configuration from the second base station, at least one security key configuration from the second base station, or an identifier of the at least one second relay user equipment; and determine the at least one second relay user equipment based, at least partially, on the early reconfiguration message.

Determining the at least one second relay user equipment may comprise the example apparatus being further configured to: receive, from the at least one second relay user equipment, a sidelink message comprising, at least, an identifier of the apparatus; and determine the at least one second relay user equipment based, at least partially, on the sidelink message.

The identifier of the apparatus may comprise at least one of: a sidelink identifier of the apparatus, a radio network temporary identifier of the apparatus, or a temporary mobile subscriber identifier of the apparatus.

In accordance with one aspect, an example method may be provided comprising: connecting, with a remote user equipment, to a first base station with one of: a direct connection, or an indirect connection via a first relay user equipment; determining, with the remote user equipment, at least one second relay user equipment for receiving a reconfiguration message for path switching to a second base station; establishing, with the remote user equipment, a sidelink connection with the at least one second relay user equipment; and receiving, with the remote user equipment via the sidelink connection from the at least one second relay user equipment, the reconfiguration message for the path switching to the second base station.

The reconfiguration message may comprise a radio resource control reconfiguration message.

The path switching may be based, at least partially, on the reconfiguration message.

The at least one second relay user equipment may comprise one of: a second relay user equipment, or the second relay user equipment and a third relay user equipment, wherein the reconfiguration message may comprise a reconfiguration message received: from the second base station at the third relay user equipment, from the second base station at the second relay user equipment, and from the second relay user equipment at the remote user equipment, wherein the path switching may comprise, at least, changing the connection between the remote user equipment and the first base station to connection between the remote user equipment and the second base station via the at least one second relay user equipment.

The at least one second relay user equipment may comprise one of: a relay user equipment among a plurality of candidate relay user equipments indicated from the first base station, or a relay user equipment among a plurality of candidate relay user equipments selected at the second base station.

The determining of the at least one second relay user equipment may comprise: receiving, with the remote user equipment from the first base station, an early reconfiguration message, wherein the early reconfiguration message comprises at least one of: an upper layer protocol configuration from the second base station, at least one security key configuration from the second base station, or an identifier of the at least one second relay user equipment; and determining, with the remote user equipment, the at least one second relay user equipment based, at least partially, on the early reconfiguration message.

The determining of the at least one second relay user equipment may comprise: receiving, with the remote user equipment from the at least one second relay user equipment, a sidelink message comprising, at least, an identifier of the remote user equipment; and determining, with the remote user equipment, the at least one second relay user equipment based, at least partially, on the sidelink message.

The identifier of the remote user equipment may comprise at least one of: a sidelink identifier of the remote user equipment, a radio network temporary identifier of the remote user equipment, or a temporary mobile subscriber identifier of the remote user equipment.

In accordance with one example embodiment, an apparatus may comprise: circuitry configured to perform: connect to a first base station with one of: a direct connection, or an indirect connection via a first relay user equipment; determine at least one second relay user equipment for receiving a reconfiguration message for path switching to a second base station; establish a sidelink connection with the at least one second relay user equipment; and receive, via the sidelink connection from the at least one second relay user equipment, the reconfiguration message for the path switching to the second base station.

In accordance with one example embodiment, an apparatus may comprise: processing circuitry; memory circuitry including computer program code, the memory circuitry and the computer program code configured to, with the processing circuitry, enable the apparatus to: connect to a first base station with one of: a direct connection, or an indirect connection via a first relay user equipment; determine at least one second relay user equipment for receiving a reconfiguration message for path switching to a second base station; establish a sidelink connection with the at least one second relay user equipment; and receive, via the sidelink connection from the at least one second relay user equipment, the reconfiguration message for the path switching to the second base station.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: connecting to a first base station with one of: a direct connection, or an indirect connection via a first relay user equipment; determining at least one second relay user equipment for receiving a reconfiguration message for path switching to a second base station; establishing a sidelink connection with the at least one second relay user equipment; and receiving, via the sidelink connection from the at least one second relay user equipment, the reconfiguration message for the path switching to the second base station.

The reconfiguration message may comprise a radio resource control reconfiguration message.

The path switching may be based, at least partially, on the reconfiguration message.

The at least one second relay user equipment may comprise one of: a second relay user equipment, or the second relay user equipment and a third relay user equipment, wherein the reconfiguration message may comprise a reconfiguration message received: from the second base station at the third relay user equipment, from the second base station at the second relay user equipment, and from the second relay user equipment at the apparatus, wherein the path switching may comprise, at least, changing the connection between the apparatus and the first base station to connection between the apparatus and the second base station via the at least one second relay user equipment.

The at least one second relay user equipment may comprise one of: a relay user equipment among a plurality of candidate relay user equipments indicated from the first base station, or a relay user equipment among a plurality of candidate relay user equipments selected at the second base station.

The means configured to perform identifying of the at least one second relay user equipment may comprise means configured to perform: receiving, from the first base station, an early reconfiguration message, wherein the early reconfiguration message may comprise at least one of: an upper layer protocol configuration from the second base station, at least one security key configuration from the second base station, or an identifier of the at least one second relay user equipment; and determining the at least one second relay user equipment based, at least partially, on the early reconfiguration message.

The means configured to perform identifying of the at least one second relay user equipment may comprise means configured to perform: receiving, from the at least one second relay user equipment, a sidelink message comprising, at least, an identifier of the apparatus; and determining the at least one second relay user equipment based, at least partially, on the sidelink message.

The identifier of the apparatus may comprise at least one of: a sidelink identifier of the apparatus, a radio network temporary identifier of the apparatus, or a temporary mobile subscriber identifier of the apparatus.

In accordance with one example embodiment, a non-transitory computer-readable medium comprising program instructions stored thereon which, when executed with at least one processor, cause the at least one processor to: cause connection of a remote user equipment to a first base station with one of: a direct connection, or an indirect connection via a first relay user equipment; determine at least one second relay user equipment for receiving a reconfiguration message for path switching to a second base station; cause establishment of a sidelink connection with the at least one second relay user equipment; and cause receiving, via the sidelink connection from the at least one second relay user equipment, of the reconfiguration message for the path switching to the second base station.

The example non-transitory computer-readable medium may be further configured to: perform an example method of the present disclosure.

In accordance with another example embodiment, a non-transitory program storage device readable by a machine may be provided, tangibly embodying a program of instructions executable by the machine for performing operations, the operations comprising: cause connection of a remote user equipment to a first base station with one of: a direct connection, or an indirect connection via a first relay user equipment; determine at least one second relay user equipment for receiving a reconfiguration message for path switching to a second base station; cause establishment of a sidelink connection with the at least one second relay user equipment; and cause receiving, via the sidelink connection from the at least one second relay user equipment, of the reconfiguration message for the path switching to the second base station.

In accordance with one example embodiment, an apparatus may comprise: at least one processor; and at least one memory including computer program code; the at least one memory and the computer program code configured to, with the at least one processor, cause the apparatus at least to: receive, from a remote user equipment, a measurement report, wherein the measurement report may comprise, at least, a list of candidate relay user equipments discovered with the remote user equipment, wherein a connection between the apparatus and the remote user equipment may comprise one of: a direct connection, or an indirect connection via a first relay user equipment; determine to perform path switching for the remote user equipment, wherein the path switching may include changing the connection between the apparatus and the remote user equipment to a connection between a second base station and the remote user equipment via at least one second relay user equipment, based, at least partially, on the measurement report; and transmit, to the remote user equipment, an early reconfiguration message, wherein the early reconfiguration message may comprise at least one of: an upper layer protocol configuration from the second base station, at least one security key configuration from the second base station, or an identifier of the at least one second relay user equipment.

The reconfiguration message may comprise a radio resource control reconfiguration message.

The path switching may be based, at least partially, on the reconfiguration message.

The at least one second relay user equipment may comprise one of: a second relay user equipment, wherein the early reconfiguration message may comprise, at least, an identifier of the second relay user equipment, or the second relay user equipment and a third relay user equipment, wherein the early reconfiguration message may comprise, at least, an identifier of the second relay user equipment.

The example apparatus may be further configured to: transmit, to the second base station, a handover request for the remote user equipment, and receive, from the second base station, an early handover response, wherein the early handover response may comprise at least one of: the upper layer protocol configuration, the at least one security key configuration, or the identifier of the at least one second relay user equipment.

Transmitting the early reconfiguration message may comprise the example apparatus being further configured to: transmit the early reconfiguration message at least one of: prior to transmitting the handover request to the second base station, prior to receiving a handover response to the transmitted handover request, or after receiving the early handover response to the transmitted handover request.

[00121] The example apparatus may be further configured to: select the at least one second relay user equipment from among a plurality of candidate relay user equipments based, at least partially, on the measurement report.

In accordance with one aspect, an example method may be provided comprising: receiving, with a first base station from a remote user equipment, a measurement report, wherein the measurement report may comprise, at least, a list of candidate relay user equipments discovered with the remote user equipment, wherein a connection between the first base station and the remote user equipment may comprise one of: a direct connection, or an indirect connection via a first relay user equipment; determining, with the first base station, to perform path switching for the remote user equipment, wherein the path switching may include changing the connection between the first base station and the remote user equipment to a connection between a second base station and the remote user equipment via at least one second relay user equipment, based, at least partially, on the measurement report; and transmitting, with the first base station to the remote user equipment, an early reconfiguration message, wherein the early reconfiguration message may comprise at least one of: an upper layer protocol configuration from the second base station, at least one security key configuration from the second base station, or an identifier of the at least one second relay user equipment.

The reconfiguration message may comprise a radio resource control reconfiguration message.

The path switching may be based, at least partially, on the reconfiguration message.

The at least one second relay user equipment may comprise one of: a second relay user equipment, wherein the early reconfiguration message may comprise, at least, an identifier of the second relay user equipment, or the second relay user equipment and a third relay user equipment, wherein the early reconfiguration message may comprise, at least, an identifier of the second relay user equipment.

The example method may further comprise: transmitting, with the first base station to the second base station, a handover request for the remote user equipment, and receiving, with the first base station from the second base station, an early handover response, wherein the early handover response may comprise at least one of: the upper layer protocol configuration, the at least one security key configuration, or the identifier of the at least one second relay user equipment.

The transmitting of the early reconfiguration message may comprise: transmitting, with the first base station, the early reconfiguration message at least one of: prior to transmitting the handover request to the second base station, prior to receiving a handover response to the transmitted handover request, or after receiving the early handover response to the transmitted handover request.

The example method may further comprise: selecting, with the first base station, the at least one second relay user equipment from among a plurality of candidate relay user equipments based, at least partially, on the measurement report.

In accordance with one example embodiment, an apparatus may comprise: circuitry configured to perform: receive, from a remote user equipment, a measurement report, wherein the measurement report may comprise, at least, a list of candidate relay user equipments discovered with the remote user equipment, wherein a connection between the apparatus and the remote user equipment may comprise one of: a direct connection, or an indirect connection via a first relay user equipment; determine to perform path switching for the remote user equipment, wherein the path switching may include changing the connection between the apparatus and the remote user equipment to a connection between a second base station and the remote user equipment via at least one second relay user equipment, based, at least partially, on the measurement report; and transmit, to the remote user equipment, an early reconfiguration message, wherein the early reconfiguration message may comprise at least one of: an upper layer protocol configuration from the second base station, at least one security key configuration from the second base station, or an identifier of the at least one second relay user equipment.

In accordance with one example embodiment, an apparatus may comprise: processing circuitry; memory circuitry including computer program code, the memory circuitry and the computer program code configured to, with the processing circuitry, enable the apparatus to: receive, from a remote user equipment, a measurement report, wherein the measurement report may comprise, at least, a list of candidate relay user equipments discovered with the remote user equipment, wherein a connection between the apparatus and the remote user equipment may comprise one of: a direct connection, or an indirect connection via a first relay user equipment; determine to perform path switching for the remote user equipment, wherein the path switching may include changing the connection between the apparatus and the remote user equipment to a connection between a second base station and the remote user equipment via at least one second relay user equipment, based, at least partially, on the measurement report; and transmit, to the remote user equipment, an early reconfiguration message, wherein the early reconfiguration message may comprise at least one of: an upper layer protocol configuration from the second base station, at least one security key configuration from the second base station, or an identifier of the at least one second relay user equipment.

In accordance with one example embodiment, an apparatus may comprise means for performing: receiving, from a remote user equipment, a measurement report, wherein the measurement report may comprise, at least, a list of candidate relay user equipments discovered with the remote user equipment, wherein a connection between the apparatus and the remote user equipment may comprise one of: a direct connection, or an indirect connection via a first relay user equipment; determining to perform path switching for the remote user equipment, wherein the path switching may include changing the connection between the apparatus and the remote user equipment to a connection between a second base station and the remote user equipment via at least one second relay user equipment, based, at least partially, on the measurement report; and transmitting, to the remote user equipment, an early reconfiguration message, wherein the early reconfiguration message may comprise at least one of: an upper layer protocol configuration from the second base station, at least one security key configuration from the second base station, or an identifier of the at least one second relay user equipment.

The reconfiguration message may comprise a radio resource control reconfiguration message.

The path switching may be based, at least partially, on the reconfiguration message.

The at least one second relay user equipment may comprise one of: a second relay user equipment, wherein the early reconfiguration message may comprise, at least, an identifier of the second relay user equipment, or the second relay user equipment and a third relay user equipment, wherein the early reconfiguration message may comprise, at least, an identifier of the second relay user equipment.

The means may be further configured to perform: transmitting, to the second base station, a handover request for the remote user equipment, and receiving, from the second base station, an early handover response, wherein the early handover response may comprise at least one of: the upper layer protocol configuration, the at least one security key configuration, or the identifier of the at least one second relay user equipment.

The means configured to perform transmitting the early reconfiguration message may comprise means configured to perform: transmitting the early reconfiguration message at least one of: prior to transmitting the handover request to the second base station, prior to receiving a handover response to the transmitted handover request, or after receiving the early handover response to the transmitted handover request.

The means may be further configured to perform: selecting the at least one second relay user equipment from among a plurality of candidate relay user equipments based, at least partially, on the measurement report.

In accordance with one example embodiment, a non-transitory computer-readable medium comprising program instructions stored thereon which, when executed with at least one processor, cause the at least one processor to: cause receiving, from a remote user equipment, of a measurement report, wherein the measurement report may comprise, at least, a list of candidate relay user equipments discovered with the remote user equipment, wherein a connection between a first base station and the remote user equipment may comprise one of: a direct connection, or an indirect connection via a first relay user equipment; determine to perform path switching for the remote user equipment, wherein the path switching may include changing the connection between the first base station and the remote user equipment to a connection between a second base station and the remote user equipment via at least one second relay user equipment, based, at least partially, on the measurement report; and cause transmitting, to the remote user equipment, of an early reconfiguration message, wherein the early reconfiguration message may comprise at least one of: an upper layer protocol configuration from the second base station, at least one security key configuration from the second base station, or an identifier of the at least one second relay user equipment.

The example non-transitory computer-readable medium may be further configured to: perform an example method of the present disclosure.

In accordance with another example embodiment, a non-transitory program storage device readable by a machine may be provided, tangibly embodying a program of instructions executable by the machine for performing operations, the operations comprising: cause receiving, from a remote user equipment, of a measurement report, wherein the measurement report may comprise, at least, a list of candidate relay user equipments discovered with the remote user equipment, wherein a connection between a first base station and the remote user equipment may comprise one of: a direct connection, or an indirect connection via a first relay user equipment; determine to perform path switching for the remote user equipment, wherein the path switching may include changing the connection between the first base station and the remote user equipment to a connection between a second base station and the remote user equipment via at least one second relay user equipment, based, at least partially, on the measurement report; and cause transmitting, to the remote user equipment, of an early reconfiguration message, wherein the early reconfiguration message may comprise at least one of: an upper layer protocol configuration from the second base station, at least one security key configuration from the second base station, or an identifier of the at least one second relay user equipment.

In accordance with one example embodiment, an apparatus may comprise: at least one processor; and at least one memory including computer program code; the at least one memory and the computer program code configured to, with the at least one processor, cause the apparatus at least to: receive, from a second base station, a reconfiguration message, wherein the received reconfiguration message may comprise a reconfiguration message for a remote user equipment; establish a sidelink connection with the remote user equipment; and forward, to the remote user equipment, the reconfiguration message for the remote user equipment.

The reconfiguration message may comprise a radio resource control reconfiguration message.

The reconfiguration message for the remote user equipment may be for path switching of the remote user equipment to the second base station.

The example apparatus may be further configured to: transmit, to the remote user equipment, a sidelink message which may comprise, at least, an identifier of the remote user equipment.

In accordance with one aspect, an example method may be provided comprising: receiving, with a relay user equipment from a second base station, a reconfiguration message, wherein the received reconfiguration message may comprise a reconfiguration message for a remote user equipment; establishing a sidelink connection with the remote user equipment; and forwarding, with the relay user equipment to the remote user equipment, the reconfiguration message for the remote user equipment.

The reconfiguration message may comprise a radio resource control reconfiguration message.

The reconfiguration message for the remote user equipment may be for path switching of the remote user equipment to the second base station.

The example method may further comprise: transmitting, with the relay user equipment to the remote user equipment, a sidelink message which may comprise, at least, an identifier of the remote user equipment.

In accordance with one example embodiment, an apparatus may comprise: circuitry configured to perform: receive, from a second base station, a reconfiguration message, wherein the received reconfiguration message may comprise a reconfiguration message for a remote user equipment; establish a sidelink connection with the remote user equipment; and forward, to the remote user equipment, the reconfiguration message for the remote user equipment.

In accordance with one example embodiment, an apparatus may comprise: processing circuitry; memory circuitry including computer program code, the memory circuitry and the computer program code configured to, with the processing circuitry, enable the apparatus to: receive, from a second base station, a reconfiguration message, wherein the received reconfiguration message may comprise a reconfiguration message for a remote user equipment; establish a sidelink connection with the remote user equipment; and forward, to the remote user equipment, the reconfiguration message for the remote user equipment.

In accordance with one example embodiment, an apparatus may comprise means for performing: receiving, from a second base station, a reconfiguration message, wherein the received reconfiguration message may comprise a reconfiguration message for a remote user equipment; establishing a sidelink connection with the remote user equipment; and forwarding, to the remote user equipment, the reconfiguration message for the remote user equipment.

The reconfiguration message may comprise a radio resource control reconfiguration message.

The reconfiguration message for the remote user equipment may be for path switching of the remote user equipment to the second base station.

The means may be further configured to perform: transmitting, to the remote user equipment, a sidelink message which may comprise, at least, an identifier of the remote user equipment.

In accordance with one example embodiment, a non-transitory computer-readable medium comprising program instructions stored thereon which, when executed with at least one processor, cause the at least one processor to: cause receiving, from a second base station, of a reconfiguration message, wherein the received reconfiguration message may comprise a reconfiguration message for a remote user equipment; cause establishment of a sidelink connection with the remote user equipment; and cause forwarding, to the remote user equipment, of the reconfiguration message for the remote user equipment.

The example non-transitory computer-readable medium may be further configured to: perform an example embodiment of the present disclosure.

In accordance with another example embodiment, a non-transitory program storage device readable by a machine may be provided, tangibly embodying a program of instructions executable by the machine for performing operations, the operations comprising: cause receiving, from a second base station, of a reconfiguration message, wherein the received reconfiguration message may comprise a reconfiguration message for a remote user equipment; cause establishment of a sidelink connection with the remote user equipment; and cause forwarding, to the remote user equipment, of the reconfiguration message for the remote user equipment.

In accordance with one example embodiment, an apparatus may comprise: at least one processor; and at least one memory including computer program code; the at least one memory and the computer program code configured to, with the at least one processor, cause the apparatus at least to: receive, from a first base station, a handover request for a remote user equipment, wherein the handover request may comprise at least one of: an indication of a relay user equipment, or an indication of a list of candidate relay user equipments; transmit, to at least one selected relay user equipment, a reconfiguration message, wherein the transmitted reconfiguration message may comprise a reconfiguration message to be forwarded to the remote user equipment; and receive, from the remote user equipment via the at least one selected relay user equipment, a reconfiguration complete message.

The reconfiguration message may comprise a radio resource control reconfiguration message.

The reconfiguration message for the remote user equipment may be for path switching of the remote user equipment to the apparatus.

The handover request may comprise the indication of the list of candidate relay user equipments, wherein the example apparatus may be further configured to: select the at least one selected relay user equipment from the list of candidate relay user equipments.

The handover request may comprise the indication of the relay user equipment, wherein the example apparatus may be further configured to: select the relay user equipment as one of the at least one selected relay user equipment.

The example apparatus may be further configured to: transmit, to the first base station, at least one of: an early handover response, a handover response, or a user equipment context release message.

The example apparatus may be further configured to: transmit, to the first base station, the early handover response at least one of: prior to transmitting a handover response to the received handover request, or prior to transmitting the reconfiguration message to the at least one selected relay user equipment.

The early handover response may comprise at least one of: an upper layer protocol configuration configured with the apparatus, at least one security key configuration configured with the apparatus, or an identifier of the at least one selected relay user equipment.

In accordance with one aspect, an example method may be provided comprising: receiving, with a second base station from a first base station, a handover request for a remote user equipment, wherein the handover request may comprise at least one of: an indication of a relay user equipment, or an indication of a list of candidate relay user equipments; transmitting, with the second base station to at least one selected relay user equipment, a reconfiguration message, wherein the transmitted reconfiguration message may comprise a reconfiguration message to be forwarded to the remote user equipment; and receiving, with the second base station from the remote user equipment via the at least one selected relay user equipment, a reconfiguration complete message.

The reconfiguration message may comprise a radio resource control reconfiguration message.

The reconfiguration message for the remote user equipment may be for path switching of the remote user equipment to the second base station.

The handover request may comprise the indication of the list of candidate relay user equipments, and the example method may further comprise: selecting the at least one selected relay user equipment from the list of candidate relay user equipments.

The handover request may comprise the indication of the relay user equipment, and the example method may further comprise: selecting the relay user equipment as one of the at least one selected relay user equipment.

The example method may further comprise: transmitting, with the second base station to the first base station, at least one of: an early handover response, a handover response, or a user equipment context release message.

The example method may further comprise: transmitting, with the second base station to the first base station, the early handover response at least one of: prior to transmitting a handover response to the received handover request, or prior to transmitting the reconfiguration message to the at least one selected relay user equipment.

The early handover response may comprise at least one of: an upper layer protocol configuration configured with the base station, at least one security key configuration configured with the base station, or an identifier of the at least one selected relay user equipment.

In accordance with one example embodiment, an apparatus may comprise: circuitry configured to perform: receive, from a first base station, a handover request for a remote user equipment, wherein the handover request may comprise at least one of: an indication of a relay user equipment, or an indication of a list of candidate relay user equipments; transmit, to at least one selected relay user equipment, a reconfiguration message, wherein the transmitted reconfiguration message may comprise a reconfiguration message to be forwarded to the remote user equipment; and receive, from the remote user equipment via the at least one selected relay user equipment, a reconfiguration complete message.

In accordance with one example embodiment, an apparatus may comprise: processing circuitry; memory circuitry including computer program code, the memory circuitry and the computer program code configured to, with the processing circuitry, enable the apparatus to: receive, from a first base station, a handover request for a remote user equipment, wherein the handover request may comprise at least one of: an indication of a relay user equipment, or an indication of a list of candidate relay user equipments; transmit, to at least one selected relay user equipment, a reconfiguration message, wherein the transmitted reconfiguration message may comprise a reconfiguration message to be forwarded to the remote user equipment; and receive, from the remote user equipment via the at least one selected relay user equipment, a reconfiguration complete message.

In accordance with one example embodiment, an apparatus may comprise means for performing: receiving, from a first base station, a handover request for a remote user equipment, wherein the handover request may comprise at least one of: an indication of a relay user equipment, or an indication of a list of candidate relay user equipments; transmitting, to at least one selected relay user equipment, a reconfiguration message, wherein the transmitted reconfiguration message may comprise a reconfiguration message to be forwarded to the remote user equipment; and receiving, from the remote user equipment via the at least one selected relay user equipment, a reconfiguration complete message.

The reconfiguration message may comprise a radio resource control reconfiguration message.

The reconfiguration message for the remote user equipment may be for path switching of the remote user equipment to the apparatus.

The handover request may comprise the indication of the list of candidate relay user equipments, and the means may be further configured to perform: selecting the at least one selected relay user equipment from the list of candidate relay user equipments.

The handover request may comprise the indication of the relay user equipment, and the means may be further configured to perform: selecting the relay user equipment as one of the at least one selected relay user equipment.

The means may be further configured to perform: transmitting, to the first base station, at least one of: an early handover response, a handover response, or a user equipment context release message.

The means may be further configured to perform: transmitting, to the first base station, the early handover response at least one of: prior to transmitting a handover response to the received handover request, or prior to transmitting the reconfiguration message to the at least one selected relay user equipment.

The early handover response may comprise at least one of: an upper layer protocol configuration configured with the apparatus, at least one security key configuration configured with the apparatus, or an identifier of the at least one selected relay user equipment.

In accordance with one example embodiment, a non-transitory computer-readable medium comprising program instructions stored thereon which, when executed with at least one processor, cause the at least one processor to: cause receiving, with a base station from a first base station, of a handover request for a remote user equipment, wherein the handover request may comprise at least one of: an indication of a relay user equipment, or an indication of a list of candidate relay user equipments; cause transmitting, with the base station to at least one selected relay user equipment, of a reconfiguration message, wherein the transmitted reconfiguration message may comprise a reconfiguration message to be forwarded to the remote user equipment; and cause receiving, with the base station from the remote user equipment via the at least one selected relay user equipment, of a reconfiguration complete message.

The example non-transitory computer-readable medium may be further configured to: perform an example method of the present disclosure.

In accordance with another example embodiment, a non-transitory program storage device readable by a machine may be provided, tangibly embodying a program of instructions executable by the machine for performing operations, the operations comprising: cause receiving, with a base station from a first base station, of a handover request for a remote user equipment, wherein the handover request may comprise at least one of: an indication of a relay user equipment, or an indication of a list of candidate relay user equipments; cause transmitting, with the base station to at least one selected relay user equipment, of a reconfiguration message, wherein the transmitted reconfiguration message may comprise a reconfiguration message to be forwarded to the remote user equipment; and cause receiving, with the base station from the remote user equipment via the at least one selected relay user equipment, of a reconfiguration complete message.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising means for performing:
connecting to a first base station with one of: a direct connection, or an indirect connection via a first relay user equipment;
determining at least one second relay user equipment for receiving a reconfiguration message for path switching to a second base station;
establishing a sidelink connection with the at least one second relay user equipment; and
receiving, via the sidelink connection from the at least one second relay user equipment, the reconfiguration message for the path switching to the second base station.

2. The apparatus of claim 1, wherein the reconfiguration message comprises a radio resource control reconfiguration message.

3. The apparatus of claim 1 or 2, wherein the path switching is based, at least partially, on the reconfiguration message.

4. The apparatus of any of claims 1 through 3, wherein the at least one second relay user equipment comprises one of:
a second relay user equipment, or
the second relay user equipment and a third relay user equipment, wherein the reconfiguration message comprises a reconfiguration message received: from the second base station at the third relay user equipment, from the second base station at the second relay user equipment, and from the second relay user equipment at the apparatus,
wherein the path switching comprises, at least, changing the connection between the apparatus and the first base station to connection between the apparatus and the second base station via the at least one second relay user equipment.

5. The apparatus of any of claims 1 through 4, wherein the at least one second relay user equipment comprises one of:
a relay user equipment among a plurality of candidate relay user equipments indicated from the first base station, or
a relay user equipment among a plurality of candidate relay user equipments selected at the second base station.

6. The apparatus of any of claims 1 through 5, wherein the determining of the at least one second relay user equipment comprises the means further configured to perform:
receiving, from the first base station, an early reconfiguration message, wherein the early reconfiguration message comprises at least one of:
an upper layer protocol configuration from the second base station,
at least one security key configuration from the second base station, or
an identifier of the at least one second relay user equipment; and
determining the at least one second relay user equipment based, at least partially, on the early reconfiguration message.

7. The apparatus of any of claims 1 through 5, wherein the determining of the at least one second relay user equipment comprises the means further configured to perform:
receiving, from the at least one second relay user equipment, a sidelink message comprising, at least, an identifier of the apparatus; and
determining the at least one second relay user equipment based, at least partially, on the sidelink message.

8. The apparatus of claim 7, wherein the identifier of the apparatus comprises at least one of:
a sidelink identifier of the apparatus,
a radio network temporary identifier of the apparatus, or
a temporary mobile subscriber identifier of the apparatus.

9. An apparatus comprising means for performing:
receiving, from a remote user equipment, a measurement report, wherein the measurement report comprises, at least, a list of candidate relay user equipments discovered with the remote user equipment, wherein a connection between the apparatus and the remote user equipment comprises one of: a direct connection, or an indirect connection via a first relay user equipment;
determining to perform path switching for the remote user equipment, wherein the path switching includes changing the connection between the apparatus and the remote user equipment to a connection between a second base station and the remote user equipment via at least one second relay user equipment, based, at least partially, on the measurement report; and
transmitting, to the remote user equipment, an early reconfiguration message, wherein the early reconfiguration message comprises at least one of:
an upper layer protocol configuration from the second base station,
at least one security key configuration from the second base station, or
an identifier of the at least one second relay user equipment.

10. The apparatus of claim 9, wherein the at least one second relay user equipment comprises one of:
a second relay user equipment, wherein the early reconfiguration message comprises, at least, an identifier of the second relay user equipment, or
the second relay user equipment and a third relay user equipment, wherein the early reconfiguration message comprises, at least, an identifier of the second relay user equipment.

11. The apparatus of claim 9 or 10, wherein the means are further configured to perform:
transmitting, to the second base station, a handover request for the remote user equipment, and
receiving, from the second base station, an early handover response, wherein the early handover response comprises at least one of:
the upper layer protocol configuration,
the at least one security key configuration, or
the identifier of the at least one second relay user equipment.

12. An apparatus comprising means for performing:
receiving, from a second base station, a reconfiguration message, wherein the received reconfiguration message comprises a reconfiguration message for a remote user equipment;
establishing a sidelink connection with the remote user equipment; and
forwarding, to the remote user equipment, the reconfiguration message for the remote user equipment.

13. The apparatus of claim 12, wherein the reconfiguration message comprises a radio resource control reconfiguration message.

14. The apparatus of claim 12 or 13, wherein the reconfiguration message for the remote user equipment is for path switching of the remote user equipment to the second base station.

15. The apparatus of any of claims 12 through 14, wherein the means are further configured to perform:
transmitting, to the remote user equipment, a sidelink message comprising, at least, an identifier of the remote user equipment.
